(19) Europäisches Patentamt / European Patent Office / Office européen des brevets

(11) **EP 3 967 724 B1**

(12) **EUROPEAN PATENT SPECIFICATION**

(45) Date of publication and mention of the grant of the patent:
**28.02.2024 Bulletin 2024/09**

(21) Application number: **20801445.6**

(22) Date of filing: **14.04.2020**

(51) International Patent Classification (IPC):
***C08K 5/29*** (2006.01) ***C08L 27/12*** (2006.01)
***C08L 67/03*** (2006.01) ***C08L 69/00*** (2006.01)

(52) Cooperative Patent Classification (CPC):
(C-Sets available)
**C08G 63/605; C08K 5/29; C08K 5/353; C08K 5/42; C08K 5/5445; C08L 69/00** (Cont.)

(86) International application number:
**PCT/JP2020/016422**

(87) International publication number:
**WO 2020/226034 (12.11.2020 Gazette 2020/46)**

(54) **POLYCARBONATE RESIN COMPOSITION**

POLYCARBONATHARZZUSAMMENSETZUNG

COMPOSITION DE RÉSINE POLYCARBONATE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.05.2019 JP 2019088498**

(43) Date of publication of application:
**16.03.2022 Bulletin 2022/11**

(73) Proprietor: **Mitsubishi Engineering-Plastics Corporation**
**Tokyo 105-0021 (JP)**

(72) Inventor: **KATAGIRI, Hiroo**
**Hiratsuka-shi, Kanagawa 254-0016 (JP)**

(74) Representative: **Müller-Boré & Partner Patentanwälte PartG mbB**
**Friedenheimer Brücke 21**
**80639 München (DE)**

(56) References cited:
**JP-A- H0 959 524**
**JP-A- S56 115 357**
**JP-A- 2000 026 741**
**JP-A- 2000 159 958**
**JP-A- 2002 080 710**
**JP-A- 2003 138 125**
**JP-A- 2007 113 011**
**JP-A- 2009 155 377**
**JP-A- 2014 218 573**
**JP-B2- 5 752 990**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



(Cont. next page)

(52) Cooperative Patent Classification (CPC): (Cont.)

C-Sets
**C08L 69/00, C08L 67/00, C08K 5/29, C08K 5/42, C08L 27/18**

## Description

[Technical Field]

The present invention relates to a polycarbonate resin composition, and more specifically relates to a polycarbonate resin composition that, with favorable balance, achieves excellent chemical resistance, flame retardancy, impact resistance, heat resistance, and moist heat resistance.

[Background Art]

Polycarbonate resins exhibit excellent strength, heat resistance and transparency and yield molded articles having excellent dimensional stability and the like, and are therefore used both indoors and outdoors as materials for producing members in fields, such as housings for electrical and electronic equipment, automobile components and residential materials, and other industrial fields. In particular, molded articles used outdoors require flame retardancy, impact resistance, heat resistance and moist heat resistance, and there have been demands for a high degree of chemical resistance in recent years.

Blending a polyethylene resin is known as a means for improving the chemical resistance of a polycarbonate resin, but polyethylene resins exhibit poor compatibility with polycarbonate resins and may not be able to achieve the desired chemical resistance depending on the state of dispersion of the polyethylene resin, and blending a polyethylene resin may lead to problems in terms of properties such as loss of fluidity, residence thermal stability and mechanical characteristics, and problems in terms of appearance defects, such as pearl luster and surface peeling.

In addition, blending a polyester resin such as polybutylene terephthalate for the purpose of improving the chemical resistance of a polycarbonate resin is also known (see PTL 1), but although a resin composition, in which a polyester resin is blended, exhibits improved chemical resistance, such a resin composition exhibits inferior flame retardancy and heat resistance, and has the drawback of readily combusting. JP 5 752990 B2 discloses a polycarbonate composition comprising polycarbonate, liquid crystal polyester having a Charpy impact strength of 30 $kJ/m^2$.

At present, it is not possible for a conventional polycarbonate resin composition to achieve, with favorable balance, excellent chemical resistance, flame retardancy, impact resistance, heat resistance and moist heat resistance.

[Citation List]

[Patent Literature]

[PTL 1] JP 2002-294060 A

[Summary of Invention]

[Technical Problem]

The object (problem) of the present invention is to solve the problems mentioned above and provide a polycarbonate resin composition that, with favorable balance, achieves excellent chemical resistance, flame retardancy, impact resistance, heat resistance and moist heat resistance.

[Solution to Problem]

As a result of diligent research carried out in order to solve the problems mentioned above, the inventors of the present invention have found that the problems mentioned above can be solved by a polycarbonate resin composition which is obtained by combining a liquid crystal polyester containing a repeating unit having a specific structure with a polycarbonate resin and which contains specific quantities of an organic metal salt flame retardant and a fluorinated resin, and thereby completed the present invention.

The present invention relates to the following polycarbonate resin composition and molded article.

[1] A polycarbonate resin composition comprising 1 to 60 parts by mass of a liquid crystal polyester (B) containing a repeating unit represented by formulae (I) to (IV) below, 0.01 to 0.5 parts by mass of an organic metal salt flame retardant (C) and 0.05 to 1 parts by mass of a fluorinated resin (D) relative to 100 parts by mass of a polycarbonate resin (A), and having a notched Charpy impact strength of 15.5 $kJ/m^2$ or more, as measured at 23°C in accordance with ISO 179 by using an ISO dumbbell having a thickness of 3 mm.

[Compound 1]

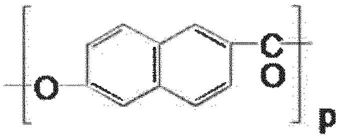

[I]

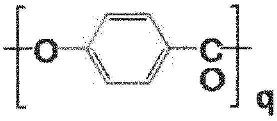

[II]

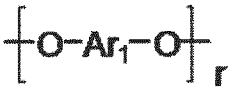

[III]

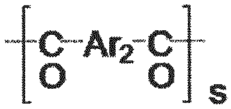

[IV]

In the formulae, $Ar_1$ is

[Compound 2]

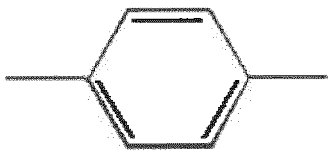

and/or

[Compound 3]

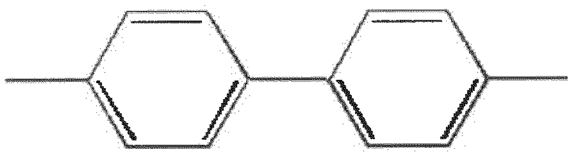

$Ar_2$ is

[Compound 4]

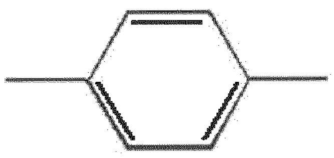

and/or

[Compound 5]

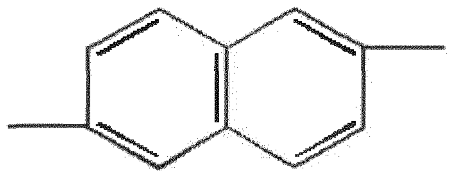

p, q, r and s are compositional proportions (mol%) of the repeating units in the liquid crystal polyester (B), and satisfy relationships below.

$$35 \leq p \leq 48,\ 35 \leq q \leq 48,\ 2 \leq r \leq 15, \text{ and } 2 \leq s \leq 15$$

[2] The polycarbonate resin composition according to [1] above, further comprising 0.01 to 10 parts by mass of a reactive compatibilizer (E) relative to 100 parts by mass of the polycarbonate resin (A).
[3] The polycarbonate resin composition according to [2] above, wherein the reactive compatibilizer (E) is at least one selected from among a silane coupling agent, a carbodiimide compound and an oxazoline compound.
[4] The polycarbonate resin composition according to [3] above, wherein the reactive compatibilizer (E) is a carbodiimide compound.
[5] The polycarbonate resin composition according to [1] above, wherein a melting point of the liquid crystal polyester (B) is 240°C or lower.
[6] The polycarbonate resin composition according to [2] above, wherein a mass ratio (E)/(B) of the reactive compatibilizer (E) and the liquid crystal polyester (B) is 0.005 to 0.5.
[7] A molded article comprising the polycarbonate resin composition according to any one of [1] to [6] above.

[Advantageous Effects of Invention]

By containing the liquid crystal polyester (B), the polycarbonate resin composition of the present invention undergoes very little decrease in impact resistance and achieves, with favorable balance, excellent chemical resistance, flame retardancy, impact resistance, heat resistance and moist heat resistance.

[Brief Description of Drawings]

[Fig. 1]
Fig. 1 is a side view that shows the shape of a three-point bending load jig used for evaluating chemical resistance in the working examples.

[Description of Embodiments]

The present invention will now be explained in detail through the use of embodiments and examples, but the present invention is not limited to the embodiments and examples shown below, and may be arbitrarily altered as long as there is no deviation from the gist of the present invention.
The polycarbonate resin composition of the present invention is characterized by containing 1 to 60 parts by mass of a liquid crystal polyester (B) containing a repeating unit represented by formulae (I) to (IV) above, 0.01 to 0.5 parts by mass of an organic metal salt flame retardant (C) and 0.05 to 1 parts by mass of a fluorinated resin (D) relative to 100 parts by mass of a polycarbonate resin (A) and by having a notched Charpy impact strength of 15.5 $kJ/m^2$ or more, as measured at 23°C in accordance with ISO 179 using an ISO dumbbell having a thickness of 3 mm.

[Polycarbonate resin (A)]

Polycarbonate resins can be classified into aromatic polycarbonate resins, in which carbon atoms directly bonded to carbonate bonds are aromatic carbon atoms, and aliphatic polycarbonate resins, in which carbon atoms directly bonded to carbonate bonds are aliphatic carbon atoms. Of these, aromatic polycarbonate resins are preferred as the polycarbonate resin (A) contained in the polycarbonate resin composition of the present invention from perspectives such as heat resistance, mechanical properties and electrical properties.

The method for producing the aromatic polycarbonate resin is not particularly limited, and it is possible to use a conventional method such as the phosgene method (an interfacial polymerization method) or a melt process (a transesterification method).

Among monomers that serve as raw materials of aromatic polycarbonate resins, typical examples of aromatic dihydroxy compounds include bis(4-hydroxyphenyl)methane, 2,2-bis(4-hydroxyphenyl)propane, 2,2-bis(4-hydroxy-3-methylphenyl)propane, 2,2-bis(4-hydroxy-3-t-butylphenyl)propane, 2,2-bis(4-hydroxy-3,5-dimethylphenyl)propane, 2,2-bis(4-hydroxy-3,5-dibromophenyl)propane, 4,4-bis(4-hydroxyphenyl)heptane, 1,1-bis(4-hydroxyphenyl)cyclohexane, 4,4'-dihydroxybiphenyl, 3,3',5,5'-tetramethyl-4,4'-dihydroxybiphenyl, bis(4-hydroxyphenyl)sulfone, bis(4-hydroxyphenyl) sulfide, bis(4-hydroxyphenyl) ether and bis(4-hydroxyphenyl) ketone.

Among the aromatic dihydroxy compounds mentioned above, 2,2-bis(4-hydroxyphenyl)propane (that is, bisphenol A) and 2,2-bis(4-hydroxy-3-methylphenyl)propane (that is, bisphenol C) are particularly preferred.

In addition, it is possible to use one of these aromatic dihydroxy compounds in isolation, or a mixture of two or more types thereof.

When producing the aromatic polycarbonate resin, it is possible to add a small quantity of a polyhydric phenol having three or more hydroxyl groups in the molecule, or the like, in addition to the aromatic dihydroxy compound mentioned above. In such cases, the aromatic polycarbonate resin has branches.

Examples of the polyhydric phenol having three or more hydroxyl groups include polyhydroxy compounds such as phloroglucin, 4,6-dimethyl-2,4,6-tris(4-hydroxyphenyl)heptene-2, 4,6-dimethyl-2,4,6-tris(4-hydroxyphenyl)heptane, 2,6-dimethyl-2,4,6-tris(4-hydroxyphenyl)heptene-3, 1,3,5-tris(4-hydroxyphenyl)benzene and 1,1,1-tris(4-hydroxyphenyl)ethane; 3,3-bis(4-hydroxyaryl)oxyindole (that is, isatinbisphenol), 5-chloroisatin, 5,7-dichloroisatin and 5-bromoisatin. Of these, 1,1,1-tris(4-hydroxylphenyl)ethane and 1,3,5-tris(4-hydroxyphenyl)benzene are preferred. The usage quantity of the polyhydric phenol is preferably 0.01 to 10 mol%, and more preferably 0.1 to 2 mol%, relative to (100 mol% of) the aromatic dihydroxy compound.

In polymerization using a transesterification method, a carbonic acid diester is used as a monomer instead of phosgene. Typical examples of carbonic acid diesters include substituted diaryl carbonates such as diphenyl carbonate and ditolyl. carbonate, and dialkyl carbonates such as dimethyl carbonate, diethyl carbonate and di-tert-butyl carbonate. It is possible to use one of these carbonic acid diesters in isolation, or a mixture of two or more types thereof. Of these, diphenyl carbonate and substituted diphenyl carbonates are preferred.

In addition, the carbonic acid diesters mentioned above may be replaced with a dicarboxylic acid or a dicarboxylic acid ester, preferably at a quantity of 50 mol% or less, and more preferably 30 mol% or less. Typical examples of dicarboxylic acids and dicarboxylic acid esters include terephthalic acid, isophthalic acid, diphenyl terephthalate and diphenyl isophthalate. In cases where some of the carbolic acid diester is replaced with this type of dicarboxylic acid or dicarboxylic acid ester, a polyester carbonate is obtained.

When producing an aromatic polycarbonate resin by a transesterification method, a catalyst is generally used. The type of catalyst is not limited, but a basic compound such as an alkali metal compound, an alkaline earth metal compound, a basic boron compound, a basic phosphorus compound, a basic ammonium compound or an amine compound is generally used. Of these, an alkali metal compound and/or an alkaline earth metal compound are particularly preferred. It is possible to use one of these catalysts in isolation or a combination of two or more types thereof. In a transesterification method, the catalysts mentioned above are generally deactivated by a p-toluenesulfonic acid ester or the like.

It is preferable for the viscosity average molecular weight (Mv) of the polycarbonate resin (A) to be 18,000 to 50,000. Mechanical strength is insufficient if the viscosity average molecular weight is less than 18,000, and fluidity and moldability deteriorate if the viscosity average molecular weight exceeds 50,000. The viscosity average molecular weight is more preferably 19,000 or more, further preferably 20,000 or more, and particularly preferably 21,000 or more, and is more preferably 45,000 or less, further preferably 40,000 or less, particularly preferably 36,000 or less, and most preferably 33,000 or less.

Moreover, in the present invention, the viscosity average molecular weight (Mv) of the polycarbonate resin is a value obtained by determining the intrinsic viscosity [η] (units: dl/g) at 25°C using a Ubbelohde viscometer using methylene chloride as a solvent, and then calculating the viscosity average molecular weight from the Schnell viscosity equation below.

$$[\eta]=1.23\times10^{-4}Mv^{0.83}$$

[Liquid crystal polyester (B)]

The polycarbonate resin composition of the present invention contains a liquid crystal polyester (B) containing a repeating unit represented by formulae (I) to (IV) below.

[Compound 6]

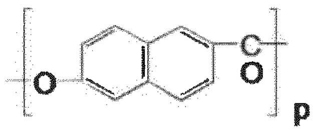

[I]

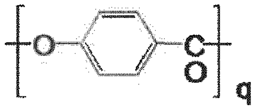

[II]

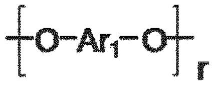

[III]

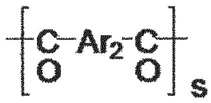

[IV]

In the formulae, $Ar_1$ is

[Compound 7]

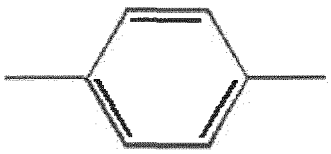

and/or

[Compound 8]

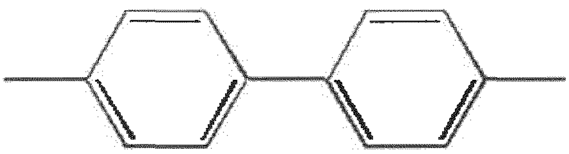

$Ar_2$ is

[Compound 9]

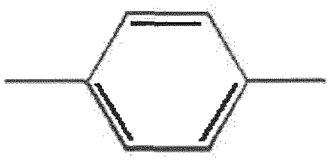

and/or

[Compound 10]

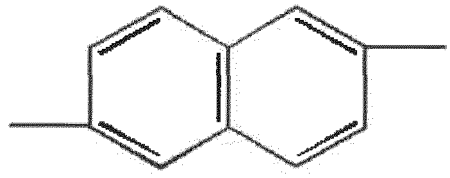

p, q, r and s are compositional proportions (mol%) of the repeating units in the liquid crystal polyester (B), and satisfy the relationships below.

$$35 \leq p \leq 48,\ 35 \leq q \leq 48,\ 2 \leq r \leq 15,\ \text{and}\ 2 \leq s \leq 15$$

Examples of monomers that yield a repeating unit represented by formula [I] include 6-hydroxy-2-naphthoic acid, and ester-forming derivatives of these, such as acylated compounds, ester derivatives and acid halides.

Examples of monomers that yield a repeating unit represented by formula [II] include para-hydroxybenzoic acid, and ester-forming derivatives of these, such as acylated compounds, ester derivatives and acid halides.

Examples of monomers that yield an aromatic dioxy repeating unit represented by formula [III] include aromatic diols such as hydroquinone, resorcin, 4,4'-dihydroxybiphenyl, 3,3'-dihydroxybiphenyl and 3,4'-dihydroxybiphenyl, alkyl-substituted, alkoxy-substituted and halogen-substituted compounds thereof, and ester-forming derivatives, such as acylated compounds, of these.

Of these, hydroquinone and 4,4'-dihydroxybiphenyl are preferred.

Specific examples of monomers that yield an aromatic dicarbonyl repeating unit represented by formula [IV] include aromatic dicarboxylic acids such as terephthalic acid, isophthalic acid, 2,6-naphthalenedicarboxylic acid, 1,6-naphthalenedicarboxylic acid, 2,7-naphthalenedicarboxylic acid and 1,4-naphthalene dicarboxylic acid, alkyl-substituted, alkoxy-substituted and halogen-substituted compounds thereof, and ester-forming derivatives of these, such as ester derivatives and acid halides.

Of these, terephthalic acid and 2,6-naphthalenedicarboxylic acid are preferred.

In the liquid crystal polyester (B) used in the present invention, p, q, r and s indicate compositional proportions (mol%) of the repeating units in the liquid crystal polyester (B), based on a total of 100 mol%, and satisfy the relationships below.

$$35 \leq p \leq 48,\ 35 \leq q \leq 48,\ 2 \leq r \leq 15,\ \text{and}\ 2 \leq s \leq 15$$

If p, q, r and s are such compositional proportions, the melting point of the liquid crystal polyester (B) is 250°C or lower, it is possible to lower the temperature during kneading, and it is therefore possible to suppress decomposition and degradation during this process.

The melting point of the liquid crystal polyester (B) is preferably 240°C or lower, and more preferably 230°C or lower, and is preferably 170°C or higher, and more preferably 180°C or higher.

Moreover, in the description and the claims, "melting point" is determined from the melting peak temperature when measurements are carried out using a differential scanning calorimeter at a temperature increase rate of 20°C/min. More specifically, the endothermic peak temperature (Tm1) is observed when a sample of the liquid crystal polyester (B) is measured under temperature increase conditions of 20°C/min from room temperature, a temperature that is 20 to 50°C higher than Tm1 is maintained for 10 minutes, the sample is then cooled to room temperature at a temperature decrease rate of 20°C/min, the endothermic peak temperature is observed when measurements are carried out again at a temperature increase rate of 20°C/min, and the temperature at which this peak top is exhibited is taken to be the melting point of the liquid crystal polyester (B). An Exstar 6000 produced by Seiko Instruments Inc., or the like, can be used as the measurement equipment.

Moreover, the liquid crystal polyester (B) may contain other repeating units in addition to the repeating units represented by formulae (I) to (IV). Specific examples of monomers that yield other repeating units include aromatic hydroxycarboxylic acids, aromatic diols and aromatic dicarboxylic acids other than those mentioned above, and aromatic hydroxydicarboxylic acids, aromatic hydroxyamines, aromatic diamine, aromatic aminocarboxylic acids, aromatic mercaptocarboxylic acids, aromatic dithiols and aromatic mercaptophenol compounds. The proportion of these other monomer components is preferably 10 mol% or less, and more preferably 5 mol% or less, relative to the total amount of monomer components that yield repeating units represented by general formulae [I] to [IV].

The logarithmic viscosity of the liquid crystal polyester (B) can be measured in pentafluorophenol, and is preferably 0.3 dl/g or more, more preferably 0.5 to 10 dl/g, and further preferably 1 to 8 dl/g, in cases where the logarithmic

viscosity is measured in pentafluorophenol at a concentration of 0.1 g/dl and a temperature of 60°C.

In addition, the melt viscosity of the liquid crystal polyester (B), as measured using a capillary rheometer, is preferably 1 to 1000 Pa·s, and more preferably 5 to 300 Pa·s.

The method for producing the liquid crystal polyester (B) is not particularly limited, and it is possible to use a well-known polyester polycondensation method comprising forming ester bonds from monomer components mentioned above, such as a melt acidolysis method or a slurry polymerization method.

A melt acidolysis method is suitable for producing the liquid crystal polyester (B) used in the present invention, and this method yields a molten polymer by first heating a monomer so as to form a molten liquid of a reactant, and then allowing a reaction to continue. Moreover, a vacuum may be employed in order to facilitate removal of volatile substances produced at the final stage of the condensation (for example, acetic acid, water, and the like).

A slurry polymerization method is a method in which a reaction is carried out in the presence of a heat exchange fluid, and a solid product is obtained in the form of a suspension in the heat exchange fluid.

In the case of a melt acidolysis method and a slurry polymerization method, polymerizable monomer components used when producing the liquid crystal polyester can be subjected to a reaction at ordinary temperature in a modified state in which hydroxyl groups are acylated, that is, as lower acyl compounds. Lower acyl groups preferably have 2 to 5 carbon atoms, and more preferably 2 or 3 carbon atoms. A method in which an acylated compound of a monomer component mentioned above is used in a reaction is particularly preferred.

A lower acylated compound of a monomer may be one synthesized in advance through acylation, but it is also possible to add an acylating agent such as acetic anhydride to a monomer when producing the liquid crystal polyester so as to generate the lower acylated compound in the reaction system.

In the case of a melt acidolysis method or a slurry polymerization method, a catalyst may be used if necessary during the reaction.

Specific examples of the catalyst include organic tin compounds such as dialkyl tin oxides (for example, dibutyl tin oxide) and diaryl tin oxides; titanium dioxide, antimony trioxide, organic titanium compounds such as titanium alkoxysilicates and titanium alkoxides; alkali metal and alkaline earth metal salts of carboxylic acids (for example, potassium acetate); and gaseous acid catalysts such as Lewis acids (for example, $BF_3$) and hydrogen halides (for example, HCl) .

The usage proportion of the catalyst is generally 10 to 1000 ppm, and preferably 20 to 200 ppm, relative to the polymerizable monomer amount.

The liquid crystal polyester (B) obtained using this type of polycondensation reaction is extracted from a polymerization reaction tank in a molten state, processed into pellets, flakes or a powder, and then blended with the polycarbonate resin (A).

The content of the liquid crystal polyester (B) is preferably 1 to 60 parts by mass relative to 100 parts by mass of the polycarbonate resin (A). By incorporating the liquid crystal polyester within such a range, it is possible to improve the balance between chemical resistance, impact resistance, heat resistance and moist heat resistance.

The content of the liquid crystal polyester (B) is preferably 2 parts by mass or more, and more preferably 3 parts by mass or more, and is preferably 50 parts by mass or less, more preferably 40 parts by mass or less, and particularly preferably 30 parts by mass or less. Because the liquid crystal polyester (B) exhibits high crystallinity, the advantageous effect of the present invention can be achieved at a lower content compared to polybutylene terephthalate or polyethylene terephthalate.

[Organic metal salt flame retardant (C)] The polycarbonate resin composition of the present invention contains an organic metal salt flame retardant (C), and the content thereof is 0.01 to 0.5 parts by mass relative to 100 parts by mass of the polycarbonate resin (A).

Examples of flame retardants include organic metal salt flame retardants, siloxane-containing flame retardants, phosphorus-containing flame retardants, boron-containing flame retardants, nitrogen-containing flame retardants and halogencontaining flame retardants, but the present invention contains an organic metal salt flame retardant in particular.

An organic sulfonic acid metal salt is particularly preferred as an organic metal salt compound.

In addition, an alkali metal or alkaline earth metal is preferred as the metal of the metal salt compound, and examples thereof include alkali metals such as lithium (Li), sodium (Na), potassium (K), rubidium (Rb) and cesium (Cs); and alkaline earth metals such as magnesium (Mg), calcium (Ca), strontium (Sr) and barium (Ba). Of these, sodium, potassium and cesium are particularly preferred.

Examples of organic sulfonic acid metal salts include organic sulfonic acid lithium salts, organic sulfonic acid sodium salts, organic sulfonic acid potassium salts, organic sulfonic acid rubidium salts, organic sulfonic acid cesium salts, organic sulfonic acid magnesium salts, organic sulfonic acid calcium salts, organic sulfonic acid strontium salts and organic sulfonic acid barium salts. Of these, organic sulfonic acid alkali metal salts such as organic sulfonic acid sodium salts, organic sulfonic acid potassium salts and organic sulfonic acid cesium salts are particularly preferred.

Examples of preferred organic sulfonic acid metal salt compounds include metal salts of fluorinated aliphatic sulfonic acids and aromatic sulfonic acids. Of these, preferred specific examples include metal salts of fluorinated aliphatic sulfonic acids, such as alkali metal salts of fluorinated aliphatic sulfonic acids having at least one C-F bond in the molecule,

such as potassium perfluorobutane sulfonate, lithium perfluorobutane sulfonate, sodium perfluorobutane sulfonate and cesium perfluorobutane sulfonate; and alkaline earth metal salts of fluorinated aliphatic sulfonic acids having at least one C-F bond in the molecule, such as magnesium perfluorobutane sulfonate, calcium perfluorobutane sulfonate, barium perfluorobutane sulfonate, magnesium trifluoromethane sulfonate, calcium trifluoromethane sulfonate and barium trifluoromethane sulfonate, and
metal salts of aromatic sulfonic acids, such as alkali metal salts of aromatic sulfonic acids having at least one type of aromatic group in the molecule, such as dipotassium diphenylsulfone-3,3'-disulfonate, potassium diphenylsulfone-3-sulfonate, sodium benzene sulfonate, sodium (poly)styrene sulfonate, sodium para-toluene sulfonate, sodium (branched) dodecylbenzene sulfonate, sodium trichlorobenzene sulfonate, potassium benzene sulfonate, potassium styrene sulfonate, potassium (poly)styrene sulfonate, potassium para-toluene sulfonate, potassium (branched) dodecylbenzene sulfonate, potassium trichlorobenzene sulfonate, cesium benzene sulfonate, cesium (poly)styrene sulfonate, cesium para-toluene sulfonate, cesium (branched) dodecylbenzene sulfonate and cesium trichlorobenzene sulfonate; and alkaline earth metal salts of aromatic sulfonic acids having at least one of aromatic group in the molecule, such as magnesium para-toluene sulfonate, calcium para-toluene sulfonate, strontium para-toluene sulfonate, barium para-toluene sulfonate, magnesium (branched) dodecylbenzene sulfonate and calcium (branched) dodecylbenzene sulfonate.

Of the examples given above, alkali metal salts of fluorinated aliphatic sulfonic acids and alkali metal salts of aromatic sulfonic acids are more preferred, alkali metal salts of fluorinated aliphatic sulfonic acids are particularly preferred, alkali metal salts of perfluoroalkane sulfonic acids are more preferred, and potassium perfluorobutane sulfonate in particular is especially preferred.

Moreover, the metal salt compound may be a single type or a combination of two or more arbitrary types thereof combined at arbitrary proportions.

Relative to 100 parts by mass of the polycarbonate resin (A), the content of the organic metal salt flame retardant (C) is 0.01 to 0.5 parts by mass, and is preferably 0.02 parts by mass or more, and more preferably 0.03 parts by mass or more, and is preferably 0.4 parts by mass or less, more preferably 0.3 parts by mass or less, and particularly preferably 0.2 parts by mass or less.

[Fluorinated resin (D)]

The polycarbonate resin composition of the present invention contains a fluorinated resin (D). By incorporating a fluorinated resin together with the components mentioned above, it is possible to improve the melt characteristics of the resin composition, improve dripping prevention properties when the resin composition is combusted, and further improve flame retardancy.

The fluorinated resin is preferably a fluoroolefin resin. Fluoroolefin resins are generally polymers or copolymers having a fluoroethylene structure, and specific examples thereof include difluoroethylene resins, tetrafluoroethylene resins and tetrafluoroethylene/hexafluoropropylene copolymer resins, but of these, a tetrafluoroethylene resin is preferred.

In addition, a fluorinated resin having fibril-forming ability is preferred as this fluorinated resin, and specific examples thereof include fluoroolefin resins having fibril-forming ability. Having fibril-forming ability tends to significantly improve dripping prevention properties when the resin composition is combusted.

In addition, an organic polymer-coated fluoroolefin resin can be advantageously used as the fluorinated resin. By using an organic polymer-coated fluoroolefin resin, dispersibility is improved, the surface appearance of a molded article is improved, and the occurrence of surface foreign matter can be suppressed.

The organic polymer-coated fluoroolefin resin can be produced using a variety of well-known methods, examples of which include (1) a method comprising mixing an aqueous dispersion of polyfluoroethylene particles and an aqueous dispersion of organic polymer particles, and then forming a powder by means of coagulation or spray drying, (2) a method comprising polymerizing a monomer that constitutes an organic polymer in the presence of an aqueous dispersion of polyfluoroethylene particles, and then forming a powder by means of coagulation or spray drying, and (3) a method comprising emulsion polymerization of a monomer having an ethylenically unsaturated bond in a mixed liquid obtained by mixing an aqueous dispersion of polyfluoroethylene particles and an aqueous dispersion of organic polymer particles, and then forming a powder by means of coagulation or spray drying.

From the perspective of dispersibility when blended with a polycarbonate resin, the monomer used to produce the organic polymer that coats the fluoroolefin resin is preferably a monomer having high affinity for the polycarbonate resin, and is more preferably an aromatic vinyl monomer, a (meth)acrylic acid ester monomer or a vinyl cyanide monomer.

Moreover, the fluorinated resin (D) may be a single type or a combination of two or more arbitrary types thereof combined at arbitrary proportions.

The content of the fluorinated resin (D) is 0.05 to 1 parts by mass, and preferably 0.1 parts by mass or more, relative to 100 parts by mass of the polycarbonate resin (A), and the upper limit of this content is preferably 0.7 parts by mass or less, and more preferably 0.5 parts by mass or less.

By setting the content of the fluorinated resin (D) to be 0.05 parts by mass or more, a sufficient flame retardancyimproving effect can be achieved, and by setting the content of the fluorinated resin to be 1 part by mass or less, appearance defects are unlikely to occur and high mechanical strength can be ensured in a molded article obtained by molding the resin composition.

[Reactive compatibilizer (E)]

The polycarbonate resin composition of the present invention preferably contains a reactive compatibilizer (E). Surface peeling can occur in a molded article obtained by molding the polycarbonate resin composition of the present invention, but by incorporating the reactive compatibilizer (E), it is possible to prevent the occurrence of surface peeling and possible to improve the surface condition of a molded article.

The reactive compatibilizer (E) is preferably at least one selected from among a silane coupling agent, a carbodiimide compound and an oxazoline compound.

Examples of silane coupling agents include aminosilanes such as y-aminopropyltriethoxysilane, N-β-(aminoethyl)-y-aminopropyltrimethoxysilane, N-β-(aminoethyl)-N'-β-(aminoethyl)-γ-aminopropyltrimethoxysilane and γ-anilinopropyltrimethoxysilane; epoxysilanes such as γ-glycidoxypropylmethyldiethoxysilane, γ-glycidoxypropyltrimethoxysilane and β-(3,4-epoxycyclohexyl)ethyltrimethoxysilane; chlorosilanes such as γ-chloropropyltrimethoxysilane; mercaptosilanes such as γ-mercaptotrimethoxysilane; vinylsilanes such as vinylmethoxysilane, vinylethoxysilane, vinyl-tris(β-methoxyethoxy)silane and N-β-(N-vinybenzylaminoethyl)-γ-aminopropyltrimethoxysilane; and acrylic silanes such as γ-methacryloxypropyltrimethoxysilane.

Oxazoline compounds are compounds having an oxazoline group, and specific examples thereof include 2,2'-o-phenylene-bis(2-oxazoline), 2,2'-m-phenylene-bis(2-oxazoline), 2,2'-p-phenylene-bis(2-oxazoline), 2,2'-p-phenylene-bis(4-methyl-2-oxazoline), 2,2'-m-phenylene-bis(4-methyl-2-oxazoline), 2,2'-p-phenylene-bis(4,4'-dimethyl-2-oxazoline), 2,2'-m-phenylene-bis(4,4'-dimethyl-2-oxazoline), 2,2'-ethylene-bis(2-oxazoline), 2,2'-tetramethylene-bis(2-oxazoline), 2,2'-hexamethylene-bis(2-oxazoline), 2,2'-octamethylene-bis(2-oxazoline), 2,2'-ethylene-bis(4-methyl-2-oxazoline) and 2,2'-diphenylene-bis(2-oxazoline).

Carbodiimide compounds are compounds having a carbodiimide group (-N=C=N-) in the molecule.

In the carbodiimide compound, a group bonded to a carbodiimide group is not particularly limited, and examples thereof include aliphatic groups, alicyclic groups, aromatic groups and groups to which these organic groups are bonded (for example, benzyl groups, phenethyl groups and 1,4-xylylene groups). Examples of carbodiimide compounds suitable for use in the present invention include aliphatic carbodiimide compounds in which an aliphatic group is linked to a carbodiimide group, alicyclic carbodiimide compounds in which an alicyclic group is linked to a carbodiimide group, and aromatic carbodiimide compounds in which an aromatic group or a group containing an aromatic group is linked to a carbodiimide group, but of these, use of an aromatic carbodiimide compound is more preferred.

Examples of aliphatic carbodiimide compounds include mono-or di-carbodiimide compounds such as diisopropylcarbodiimide, dimethylcarbodiimide, diisobutylcarbodiimide, dioctylcarbodiimide, t-butylisopropylcarbodiimide and di-t-butylcarbodiimide, and polycarbodiimide compounds.

Examples of alicyclic carbodiimide compounds include dicarbodiimide such as dicyclohexylcarbodiimide and polycarbodiimide such as poly(4,4'-dicyclohexylmethane carbodiimide).

Examples of aromatic carbodiimide compounds include mono- and di-carbodiimide compounds such as diphenylcarbodiimide, di-β-naphthylr_arbodiimide, di-2,6-dimethylphenylcarbodiimide, N-tolyl-N'-phenylcarbodiimide, dip-nitrophenylcarbodiimide, di-p-aminophenylcarbodiimide, di-p-hydroxyphenylcarbodiimide, di-p-chlorophenylcarbodiimide, dip-methoxyphenylcarbodiimide, di-3,4-dichlorophenylcarbodiimide, di-2,5-chlorophenylcarbodiimide, di-o-chlorophenylcarbodiimide, p-phenylene-bis-di-o-tolylcarbodiimide, p-phenylene-bis-dicyclohexylcarbodiimide, p-phenylene-bis-di-chlorophenylcarbodiimide and ethylene-bis-diphenylcarbodiimide; and polycarbodiimide compounds such as poly(4,4'-diphenylmethane carbodiimide), poly(3,5'-dimethyl-4,4'-diphenylmethane carbodiimide), poly(p-phenylenecarbodiimide), poly(m-phenylenecarbodiimide), poly(naphthalene carbodiimide), poly(1,3-diisopropylphenylene carbodiimide), poly(1-methyl-3,5-diisopropylphenylenecarbodiimide), poly(1,3,5-triethylphenylene carbodiimide) and poly(triisopropylphenylenecarbodiimide).

In the present invention, use of a polycarbodiimide compound having two or more carbodiimide groups in the molecule is more preferred as the carbodiimide compound, and use of an aromatic polycarbodiimide compound is further preferred.

A polycarbodiimide compound having two or more carbodiimide groups can be produced by, for example, subjecting a polyvalent isocyanate compound having at least two isocyanate groups in the molecule to a decarboxylation condensation reaction (a carbodiimidation reaction) in the presence of a carbodiimidation catalyst. The carbodiimidation reaction can be carried out using a well-known method and, more specifically, it is possible to dissolve the isocyanate in an inert solvent or add a carbodiimidation catalyst such as an organic phosphorus compound, such as phosphorene oxide, in the absence of a solvent in a stream of an inert gas such as nitrogen or under bubbling of said inert gas, and

then heating and stirring at a temperature within the range 150 to 200°C, thereby facilitating a condensation reaction (a carbodiimidation reaction) with decarboxylation.

A difunctional isocyanate having two isocyanate groups in the molecule is particularly suitable as the polyvalent isocyanate compound, but it is possible to additionally use an isocyanate compound having three or more isocyanate groups in combination with the diisocyanate. In addition, the polyvalent isocyanate compound can be an aliphatic isocyanate, an alicyclic isocyanate or an aromatic isocyanate.

Specific examples of the polyvalent isocyanate include hexamethylene diisocyanate, hydrogenated xylylene diisocyanate, xylylene diisocyanate, 2,2,4-trimethylhexamethylene diisocyanate, 1,12-diisocyanatododecane, norbornane diisocyanate, 2,4-bis-(8-isocyanatooctyl)-1,3-dioctylcyclobutane, 4,4'-dicyclohexylmethane diisocyanate, tetramethylxylylene diisocyanate, isophorone diisocyanate, 2,4,6-triisopropylphenyl diisocyanate, 4,4'-diphenylmethane diisocyanate (MDI), tolylene diisocyanate (TDI) and hydrogenated tolylene diisocyanate, but the polyvalent isocyanate compound is not limited to these.

Preferred examples of these carbodiimide compounds include di-2,6-dimethylphenyl carbodiimide, poly(4,4'-diphenylmethane carbodiimide), poly(phenylene carbodiimide), poly(4,4'-dicyclohexylmethane carbodiimide), poly(triisopropylphenylene carbodiimide) and poly(diisopropylphenyl carbodiimide), with poly(4,4'-dicyclohexylmethane carbodiimide) and poly(triisopropylphenylene carbodiimide) being particularly preferred.

Among the compounds listed above, a carbodiimide compound is particularly preferred as the reactive compatibilizer (E).

The content of the reactive compatibilizer (E) is preferably 0.01 to 10 parts by mass relative to 100 parts by mass of the polycarbonate resin (A). If the content of the reactive compatibilizer (E) falls within the range mentioned above, it is easy to prevent the occurrence of surface peeling in a molded article and improve the surface condition of the molded article. The lower limit of the content of the reactive compatibilizer (E) is preferably 0.02 parts by mass or 0.05 parts by mass, and the upper limit thereof is preferably 7 parts by mass, 5.5 parts by mass, 3.5 parts by mass, 2.7 parts by mass, 1.0 parts by mass, 0.8 parts by mass or 0.5 parts by mass.

The mass ratio (E)/(B) of the reactive compatibilizer (E) and the liquid crystal polyester (B) is preferably 0.005 to 0.5. If the mass ratio (E)/(B) falls within the range mentioned above, it is easier to prevent the occurrence of surface peeling in a molded article and further improve the surface condition of the molded article. The lower limit of the mass ratio (E)/(B) is preferably 0.007 or 0.01, and the upper limit thereof is preferably 0.4, 0.2, 0.1 or 0.05.

[Elastomer]

The polycarbonate resin composition of the present invention preferably contains an elastomer. By incorporating an elastomer, it is possible to improve the impact resistance of the resin composition.

The elastomer used in the present invention is preferably a graft copolymer obtained by graft copolymerizing a rubber component and a monomer component able to be copolymerized with the rubber component. The method for producing the graft copolymer can be bulk polymerization, solution polymerization, suspension polymerization, emulsion polymerization, or the like, and the copolymerization method may be single stage graft copolymerization or multistage graft copolymerization.

The glass transition temperature of the rubber component is generally 0°C or lower, preferably -20°C or lower, and more preferably -30°C or lower. Specific examples of the rubber component include poly(alkyl acrylate) rubbers such as polybutadiene rubbers, polyisoprene rubbers, poly(butyl acrylate), poly(2-ethylhexyl acrylate) and butyl acrylate·2-ethylhexyl acrylate copolymers, silicone rubbers such as polyorganosiloxane rubbers, butadiene-acrylic composite rubbers, Interpenetrating Polymer Network (IPN) composite rubbers comprising polyorganosiloxane rubbers and poly(alkyl acrylate) rubbers, styrene-butadiene rubbers, ethylene-$\alpha$-olefin-containing rubbers such as ethylenepropylene rubbers, ethylene-butene rubbers and ethylene-octene rubbers, ethylene-acrylic rubbers and fluororubbers. It is possible to use one of these rubber components in isolation, or a mixture of two or more types thereof.

Of these, polybutadiene rubbers, poly(alkyl acrylate) rubbers, polyorganosiloxane rubbers, IPN-containing composite rubbers comprising polyorganosiloxane rubbers and poly(alkyl acrylate) rubbers, and styrene-butadiene rubbers are preferred from the perspectives of mechanical properties and surface appearance.

Specific examples of the monomer component able to be graft copolymerized with the rubber component include aromatic vinyl compounds, vinyl cyanide compounds, (meth)acrylic acid ester compounds, (meth)acrylic acid compounds, epoxy group-containing (meth)acrylic acid ester compounds such as glycidyl (meth)acrylate; maleimide compounds such as maleimide, N-methylmaleimide and N-phenylmaleimide; $\alpha,\beta$-unsaturated carboxylic acid compounds, such as maleic acid, phthalic acid and itaconic acid, and anhydrides thereof (for example, maleic anhydride). It is possible to use one of these monomer components in isolation, or a combination of two or more types thereof. Of these, aromatic vinyl compounds, vinyl cyanide compounds, (meth)acrylic acid ester compounds and (meth)acrylic acid compounds are preferred from the perspectives of mechanical properties and surface appearance, and (meth)acrylic acid ester compounds are more preferred. Specific examples of (meth)acrylic acid ester compounds include methyl

(meth)acrylate, ethyl (meth)acrylate, butyl (meth)acrylate, cyclohexyl (meth)acrylate and octyl (meth)acrylate.

From the perspectives of impact resistance and surface appearance, the graft copolymer copolymerized with the rubber component is preferably a core/shell type graft copolymer. Of these, a core/shell type graft copolymer comprising a core layer having at least one type of rubber component selected from among a polybutadiene-containing rubber, a poly(butyl acrylate)-containing rubber, a polyorganosiloxane rubber and an IPN-containing composite rubber comprising a polyorganosiloxane rubber and a poly(alkyl acrylate) rubber and, around the core layer, a shell layer formed by copolymerizing a (meth)acrylic acid ester is particularly preferred. The content of the rubber component in the core/shell type graft copolymer is preferably 40 mass% or more, and more preferably 60 mass% or more. In addition, the content of (meth)acrylic acid is preferably 10 mass% or more.

Moreover, the core/shell type copolymer in the present invention may be one in which the core layer and shell layer cannot be clearly differentiated, and broadly encompasses compounds obtained by graft copolymerizing a rubber component around a portion that serves as a core.

Specific preferred examples of these core/shell type graft copolymers include methyl methacrylate-butadiene-styrene copolymers (MBS), methyl methacrylate-acrylonitrile-butadiene-styrene copolymers (MABS), methyl methacrylate-butadiene copolymers (MB), methyl methacrylate-acrylic rubber copolymers (MA), methyl methacrylate-acrylic rubber-styrene copolymers (MAS), methyl methacrylate-acrylic-butadiene rubber copolymers, methyl methacrylate-acrylic-butadiene rubber-styrene copolymers, methyl methacrylate-(acrylic-silicone IPN rubber) copolymers and silicone-acrylic composite rubbers containing a polyorganosiloxane and a poly(alkyl (meth)acrylate), with silicone-acrylic composite rubbers containing a polyorganosiloxane and a poly(alkyl (meth)acrylate) and methyl methacrylate-butadiene copolymers (MB) being particularly preferred. It is possible to use one of these rubbery polymers in isolation, or a combination of two or more types thereof.

Among the examples given above, a core/shell type graft copolymer in which a butadiene rubber is used as the core and a (meth)acrylate polymer is used as the shell is preferred as the elastomer.

The content of the elastomer is preferably 1 to 20 parts by mass, more preferably 1 to 15 parts by mass, and further preferably 1 to 10 parts by mass, relative to 100 parts by mass of the polycarbonate resin (A).

It is possible to use one of these elastomers in isolation, or two or more types thereof. In cases where two or more types of elastomer are contained, the total quantity thereof falls within the range mentioned above.

[Stabilizer]

It is preferable for the polycarbonate resin composition of the present invention to contain a stabilizer from the perspectives of improving thermal stability and preventing a deterioration in mechanical strength and hue.

Phosphorus stabilizers, sulfur stabilizers and phenolic stabilizers are preferred as the stabilizer. Incorporating a phosphorus stabilizer in particular is preferable from the perspectives of being able to effectively suppress a transesterification reaction between the liquid crystal polyester (B) and the polycarbonate resin (A) and improving mechanical characteristics such as impact resistance.

Examples of phosphorus stabilizers include phosphorus acid, phosphoric acid, phosphorus acid esters and phosphoric acid esters, and of these, organic phosphate compounds, organic phosphite compounds and organic phosphonite compounds are preferred.

A preferred organic phosphate compound is a compound represented by the general formula below:

$$(R^1O)_{3-n}P(=O)OH_n$$

(In the formula, R1 denotes an alkyl group or an aryl group, and multiple $R^1$ groups may be the same as, or different from, each other. n denotes an integer of 0 to 2.) or a metal salt thereof. A more preferred example of an organic phosphate compound represented is a long chain alkyl acid phosphate compound in which $R^1$ has 8 to 30 carbon atoms. Specific examples of alkyl groups having 8 to 30 carbon atoms include octyl groups, 2-ethylhexyl groups, isooctyl groups, nonyl groups, isononyl groups, decyl groups, isodecyl groups, dodecyl groups, tridecyl groups, isotridecyl groups, tetradecyl groups, hexadecyl groups, octadecyl groups, eicosyl groups and triacontyl groups. Examples of metal salts include salts of alkaline earth metals, zinc, lead and tin, with zinc salts being particularly preferred.

Examples of long chain alkyl acid phosphate compounds include octyl acid phosphate, 2-ethylhexyl acid phosphate, decyl acid phosphate, lauryl acid phosphate, octadecyl acid phosphate, oleyl acid phosphate, behenyl acid phosphate, phenyl acid phosphate, nonylphenyl acid phosphate, cyclohexyl acid phosphate, phenoxyethyl acid phosphate, alkoxy polyethylene glycol acid phosphates, bisphenol A acid phosphate, dimethyl acid phosphate, diethyl acid phosphate, dipropyl acid phosphate, diisopropyl acid phosphate, dibutyl acid phosphate, dioctyl acid phosphate, di-2-ethylhexyl acid phosphate, dioctyl acid phosphate, dilauryl acid phosphate, distearyl acid phosphate, diphenyl acid phosphate, bisnonylphenyl acid phosphate and metal salts of these. Of these, octadecyl acid phosphate is preferred, and this is commercially available as, for example, Adekastab AX-71 (octadecyl acid phosphate) produced by Adeka

Corp. and JP-518Zn (Zn salt of octadecyl acid phosphate) produced by Johoku Chemical Co., Ltd.

A preferred organic phosphite compound is a compound represented by the general formula below: $R^2O-P(OR^3)(OR^4)$ (In the formula, $R^2$, $R^3$ and $R^4$ are each a hydrogen atom, an alkyl group having 1 to 30 carbon atoms or an aryl group having 6 to 30 carbon atoms, and at least one of $R^2$, $R^3$ and $R^4$ is an aryl group having 6 to 30 carbon atoms.)

Examples of organic phosphite compounds include triphenyl phosphite, tris(nonylphenyl) phosphite, dilauryl hydrogen phosphite, triethyl phosphite, tridecyl phosphite, tris(2-ethylhexyl) phosphite, tris(tridecyl) phosphite, tristearyl phosphite, diphenylmonodecyl phosphite, monophenyldidecyl phosphite, diphenylmono(tridecyl) phosphite, tetraphenyldipropylene glycol diphosphite, tetraphenyltetra(tridecyl)pentaerythritol tetraphosphite, hydrogenated bisphenol A phenyl phosphite polymers, diphenyl hydrogen phosphite, 4,4'-butylidene-bis(3-methyl-6-tert-butylphenyldi(tridecyl) phosphite), tetra(tridecyl)4,4'-isopropylidene diphenyl diphosphite, bis(tridecyl)pentaerythritol diphosphite, bis(nonylphenyl)pentaerythritol diphosphite, dilaurylpentaerythritol diphosphite, distearylpentaerythritol diphosphite, tris(4-tert-butylphenyl) phosphite, tris(2,4-di-tert-butylphenyl) phosphite, hydrogenated bisphenol A pentaerythritol phosphite polymers, bis(2,4-di-tert-butylphenyl)pentaerythritol diphosphite, bis(2,6-di-tert-butyl-4-methylphenyl)pentaerythritol diphosphite, 2,2'-methylene-bis(4,6-di-tert-butylphenyl)octyl phosphite and bis(2,4-dicumylphenyl)pentaerythritol diphosphite. Of these, bis(2,6-di-tert-butyl-4-methylphenyl)pentaerythritol diphosphite is preferred, and this is commercially available as, for example, PEP-36 produced by Adeka Corp.

A preferred organic phosphonite compound is a compound represented by the general formula below:

$$R^5\text{-}P(OR^6)(OR^7)$$

(In the formula, $R^5$, $R^6$ and $R^7$ are each a hydrogen atom, an alkyl group having 1 to 30 carbon atoms or an aryl group having 6 to 30 carbon atoms, and at least one of $R^5$, $R^6$ and $R^7$ is an aryl group having 6 to 30 carbon atoms.)

In addition, examples of organic phosphonite compounds include tetrakis(2,4-di-iso-propylphenyl)-4,4'-biphenylene diphosphonite, tetrakis(2,4-di-n-butylphenyl)-4,4'-biphenylene diphosphonite, tetrakis(2,4-di-tert-butylphenyl)-4,4'-biphenylene diphosphonite, tetrakis(2,4-di-tert-butylphenyl)-4,3'-biphenylene diphosphonite, tetrakis(2,4-di-tert-butylphenyl)-3,3'-biphenylene diphosphonite, tetrakis(2,6-di-iso-propylphenyl)-4,4'-biphenylene diphosphonite, tetrakis(2,6-di-n-butylphenyl)-4,4'-biphenylene diphosphonite, tetrakis(2,6-di-tert-butylphenyl)-4,4'-biphenylene diphosphonite, tetrakis(2,6-di-tert-butylphenyl)-4,3'-biphenylene diphosphonite and tetrakis(2,6-di-tert-butylphenyl)-3,3'-biphenylene diphosphonite.

Any conventional well-known sulfur atom-containing compound can be used as the sulfur stabilizer, and of these, a thioether compound is preferred. Specific examples thereof include didodecyl thiodipropionate, ditetradecyl thiodipropionate, dioctadecyl thiodipropionate, pentaerythritol tetrakis(3-dodecyl thiopropionate), thiobis(N-phenyl-β-naphthylamine), 2-mercaptobenzotriazole, 2-mercaptobenzimidazole, tetramethyl thiuram monosulfide, tetramethyl thiuram disulfide, nickel dibutyl dithiocarbamate, nickel isopropyl xanthate and trilauryl trithiophosphate. Of these, pentaerythritol tetrakis(3-dodecyl thiopropionate) is preferred

Examples of phenolic stabilizers include pentaerythritol tetrakis(3-(3,5-di-t-butyl-4-hydroxyphenyl)propionate), octadecyl-3-(3,5-di-tert-butyl-4-hydroxyphenyl)propionate, thiodiethylene bis(3-(3,5-di-tert-butyl-4-hydroxyphenyl)propionate), and pentaerythritol tetrakis(3-(3,5-di-neopentyl-4-hydroxyphenyl)propionate). Of these, pentaerythritol tetrakis(3-(3,5-di-tert-butyl-4-hydroxyphenyl)propionate) and octadecyl-3-(3,5-di-tert-butyl-4-hydroxyphenyl)propionate are preferred.

It is possible to incorporate one stabilizer or an arbitrary combination of two or more types thereof combined at arbitrary proportions.

The content of the stabilizer is preferably 0.001 to 1 parts by mass relative to 100 parts by mass of the polycarbonate resin (A). If the content of the stabilizer is less than 0.001 parts by mass, an improvement in the thermal stability and compatibility of the resin composition can hardly be expected and a decrease in molecular weight and a deterioration in color tone readily occur when the composition is molded, and if the content of the stabilizer exceeds 1 part by mass, the quantity thereof becomes excessive, silvering occurs, and a deterioration in color tone readily occurs. The content of the stabilizer is more preferably 0.001 to 0.7 parts by mass, and further preferably 0.005 to 0.6 parts by mass.

[Other components]

The polycarbonate resin composition may, if necessary, contain components other than those mentioned above as long as the desired physical properties are not significantly impaired. Examples of such other components include resins other than those mentioned above and a variety of resin additives.

Moreover, in cases where a resin other than those mentioned above is contained, the content thereof is preferably 20 parts by mass or less, more preferably 10 parts by mass or less, further preferably 5 parts by mass or less, and particularly preferably 3 parts by mass or less, relative to 100 parts by mass of the polycarbonate resin (A).

Examples of resin additives include mold-release agents, ultraviolet radiation absorbers, anti-static agents,

dyes/pigments, anti-fogging agents, lubricants, anti-blocking agents, fluidity-improving agents, plasticizers, dispersing agents and antimicrobial agents. Moreover, it is possible to incorporate one resin additive or an arbitrary combination of two or more types thereof combined at arbitrary proportions.

[Method for producing polycarbonate resin composition]

Methods for producing the polycarbonate resin composition are not limited, and publicly known methods for producing polycarbonate resin compositions can be widely used, an example of which is a method consisting of preliminarily mixing the essential components mentioned above and other components to be blended as required in any of a variety of mixing machines, such as a tumbler or Henschel mixer, and then melt kneading using a mixer such as a Banbury mixer, a roller, a Brabender, a uniaxial kneading extruder, a biaxial kneading extruder, or a kneader.
Moreover, the temperature during the melt kneading is not particularly limited, but is generally within the range 220 to 320°C.
The Charpy impact strength of the polycarbonate resin composition of the present invention is such that the notched Charpy impact strength, as measured at 23°C in accordance with ISO 179 using an ISO dumbbell of the resin composition having a thickness of 3 mm, is 15.5 $kJ/m^2$ or more, preferably 17 $kJ/m^2$ or more, more preferably 20 $kJ/m^2$ or more, and further preferably 23 $kJ/m^2$ or more. The upper limit of the notched Charpy impact strength is not particularly limited, but is preferably 100 $kJ/m^2$ or less, and more preferably 90 $kJ/m^2$ or less.

[Molded article]

The polycarbonate resin composition (pellets) mentioned above is formed into molded articles by being molded using a variety of molding methods.
The shape of the molded article is not particularly limited and can be selected as appropriate according to the intended use of the molded article, and examples of the shape include lamellar, plate, rod, sheet, film, cylindrical, annular, circular, elliptical, polygonal, irregular, hollow, frame-like, box-like, panel-like, or the like.
The method for forming the molded article is not particularly limited, and a conventional publicly known molding method can be used, examples of which include injection molding methods, injection compression molding methods, extrusion molding methods, profile extrusion methods, transfer molding methods, hollow molding methods, gas assisted hollow molding methods, blow molding methods, extrusion blow molding methods, IMC (in-mold coating) molding methods, rotational molding methods, multilayer molding methods, two color formation methods, insert molding methods, sandwich molding methods, foaming molding methods and pressure molding methods.
Of these, molding is preferably carried out using an injection molding method, with injection molding being carried out using a well-known injection molding machine such as an injection molding machine, an ultra high-speed injection molding machine or an injection compression molding machine. The cylinder temperature of the injection molding machine at the time of injection molding is preferably 220 to 340°C, more preferably 240 to 330°C, and further preferably 260 to 320°C. In addition, the injection speed at the time of injection molding is preferably 10 to 1,000 mm/sec, and more preferably 10 to 500 mm/sec.

[Molded article]

Molded bodies of the polycarbonate resin composition of the present invention exhibit excellent chemical resistance, flame retardancy, impact resistance, heat resistance and moist heat resistance, and can therefore be advantageously used both indoors and outdoors as materials for producing members in industrial fields such as housings for electrical and electronic equipment, motor vehicle components and residential materials. Molded bodies of the polycarbonate resin composition of the present invention can be used particularly advantageously in molded articles for outdoor applications, for example, molded articles for outdoor electrical power meters, such as covers and housings for electrical power meters (power meters and electricity meters).

[Working Examples]

The present invention will now be explained in greater detail through the use of working examples. However, the present invention is not limited to the working examples given below and may be arbitrarily altered as long as the gist of the present invention is not exceeded.
The components used in the working examples and comparative examples are as shown in Table 1 below.

[Table 1]

| Component | | Simbol | |
|---|---|---|---|
| PC resin (A) | | A | Aromatic polycarbonate resin produced by interfacial polymerization using bisphenol A as starting material. Viscosity average molecular weight (Mv): 28,000 |
| Liquid crystal polyester | | B | Liquid crystal polyester of 43 mol% of units derived from 4-hydroxybenzoic acid 41 mol% of units derived from 6-hydroxy-2-naphthoic acid 8 mol% of units derived from hydroquinone 8 mol% of units derived from terephthalic acid Melting point: 221°C |
| | | BX | Liquid crystal polyester of 77 mol% of units derived from 4-hydroxybenzoic acid 23 mol% of units derived from 6-hydroxy-2-naphthoic acid Melting point: 280°C |
| Metal salt flame retardant (C) | | C | Potassium perfluorobutane sulfonate BAYOWET C4 by LANXESS |
| Phosphorus flame retardant | | CX | Resorcinol (dixylenyl phosphate) PX-200 by Daihachi Chemical Industry Co.. |
| Fluorinated resin (D) | | D | Polytetrafluoroethylene 6J by Dupont-Mitsui Fluorochemicals Co. |
| Reactive compatibilizer (E) | Carbodiimide | E1 | Poly(4,4'-dicyclohexylmethane carbodiimide) LA-1, produced by Nisshinbo Chemical Inc. |
| | Silane coupling agent | E2 | γ-aminopropyltriethoxysilane Silquest A-1100 by Momentive |
| | Oxazoline | E3 | Oxazoline group-containing reactive polystyrene Epocros RPS-1005 by Nippon Shokubai Co. |
| Elastomer | | F | Core-shell type graft copolymer consisting of butadiene rubber core and methyl acrylate shell. Metablen E-875A by Mitsubishi Chemical Corp. |
| Stabilizer | | G | Zinc salt of stearyl acid phosphate JP518Zn by Johoku Chemical Co. |

(Working Examples 1 to 17 and Comparative Examples 1 to 6)

Components shown in Table 1 above were homogeneously mixed using a tumbler mixer at proportions shown in Table 3 and Table 4 below (all shown in terms of parts by mass), fed from a hopper into an extruder, and melt kneaded. Using twin screw extruder available from Japan Steel Works, Ltd. (TEX25a III, L/D=52.5) as the extruder, melt extrusion was carried out at a screw rotation speed of 200 rpm, a cylinder temperature of 280°C and a discharge rate of 30 kg/hr, and the extruded strands were rapidly cooled in a water bath and pelletized using a pelletizer.

Pellets obtained using the production method described above were dried for 5 hours at 120°C, after which an ISO dumbbell test piece having a thickness of 4 mm, an ISO dumbbell test piece having a thickness of 3 mm and a strip-like combustion test piece having a thickness of 1.5 mm were molded using a NEX80 III injection molding machine produced by Nissei Plastic Industrial Co., Ltd. at a cylinder temperature of 280°C, a mold temperature of 80°C, an injection speed of 30 mm/s and a holding pressure of 80 MPa,

<Notched Charpy impact strength>

Notched Charpy impact strength (units: $kJ/m^2$) was measured at 23°C in accordance with ISO 179 using the obtained ISO dumbbell having a thickness of 3 mm. The notched Charpy impact strength at 23°C is preferably 15.5 $kJ/m^2$ or more, more preferably 17 $kJ/m^2$ or more, further preferably 20 $kJ/m^2$ or more, and particularly preferably 23 $kJ/m^2$ or more.

<Deflection temperature under load DTUL>

In accordance with ISO 75-1&2, a fixed bending load (1.8 MPa) was applied (in a flatwise direction) to the center of a test piece measuring 4 mm×10 mm, the temperature was increased at a constant rate, and the temperature (°C) was measured when the central part reached a strain of 0.34 mm.

<Combustibility UL94>

Using the obtained strip-like combustion test piece having a thickness of 1.5 mm, flame retardancy was tested using five test pieces in accordance with the Underwriters Laboratories Subject 94 (UL94) method, and classified as V-0, V-1, V-2 or not suitable (NG).

<Surface peeling of molded article>

Using the obtained ISO dumbbell having a thickness of 3 mm, cellophane tape was bonded to a side surface of the dumbbell, a procedure comprising peeling off the cellophane tape in one motion was repeated three times in the same place, and the presence/absence of peeling was confirmed.

◦: No surface peeling
×: Surface peeling

<Chemical resistance>

A jig to which a three-point bending load was applied, as shown in Fig. 1, was used in an environment at a temperature of 23°C.

In a state whereby the obtained ISO dumbbell test piece 1 having a thickness of 3 mm was coated with chemicals having the product names shown in Table 2, the test piece was attached below the center of a test piece attachment jig 2. A fastening cylinder 3 for adjusting the amount of strain was attached to the test piece attachment jig 2, and the amount of strain could be adjusted to 1% or 0.4% by fixing with a thumbscrew 4.

In a state whereby the ISO dumbbell test piece 1 was fixed to the test piece attachment jig 2, the test piece was fastened so that the amount of strain was 1% or 0.4%. After 48 hours, the molded article was released from the fastening, the coated chemical was wiped off, and the presence or absence of cracks was confirmed visually according to the following criteria.

◦: No cracks
×: Cracks

[Table 2]

| | |
|---|---|
| CHARMY GREEN | Produced by Lion Corporation, synthetic kitchen detergent<br>Liquid properties: neutral<br>Components: surfactants (13% sodium α-olefin sulfonate, polyoxyethylene fatty acid alkanolamide), stabilizer |
| ARMOR ALL | Produced by Napolex Corporation, protective lustering agent for cars<br>Liquid properties: neutral<br>Components: silicone, emulsifier, surfactant |
| BANANA BOAT | Produced by Edgewell, sunscreen spray<br>Components:<br>Active ingredients: Azobenzone 2.0%, Homosalate 7.0%, Octocrylene 5.0%<br>Inert ingredients: Alcohol Denat, Isobutane, Isododecane, Diisopropyl Adipate, Laulyl PEG-8 Dimethicone, Phenylisopropyl Dimethicone, Polyglyceryl-3 Stearate/Isostearate/Dimer Dilinoleate Copolymer, Caprylyl Glycol, Methyl Dihydroabietate,Fragrance, Ascorbyl Palmitate, Tocophenyl Acetate, Mineral Oil, Panthenol, Water, Aloe Barbadensis Leaf Extract |

Results from the evaluations above are shown in Table 3 below. In Table 3, "Ex n" means "Example n" and "CEx n" means "Comparative Example n".

[Table 3]

| Component | | Simbol | CEx1 | Ex1 | Ex2 | Ex3 | CEx2 | CEx3 | CEx4 | Ex4 | Ex5 | Ex6 | Ex7 | CEx5 | CEx6 |
|---|---|---|---|---|---|---|---|---|---|---|---|---|---|---|---|
| PC resin (A) | | A | 100 | 100 | 100 | 100 | 100 | 100 | 100 | 100 | 100 | 100 | 100 | 100 | 100 |
| Liquid crystal polyester | | B | | 5.3 | 11.2 | 17.8 | | | | 5.4 | 11.3 | 18.0 | 11.2 | 5.9 | 100 |
| | | BX | | | | | 5.3 | 11.2 | 17.8 | | | | | | |
| Metal salt flame retardant (C) | | C | 0.08 | 0.08 | 0.09 | 0.09 | 0.08 | 0.09 | 0.09 | 0.09 | 0.09 | 0.10 | 0.09 | | 0.08 |
| Phosphorus flame retardant | | CX | | | | | | | | | | | | 11.8 | |
| Fluorinated resin (D) | | D | 0.3 | 0.3 | 0.3 | 0.4 | 0.3 | 0.3 | 0.4 | 0.3 | 0.3 | 0.4 | 0.3 | 0.4 | 0.3 |
| Reactive compatibilizer (E) | Carbodiimide | E1 | | 0.106 | 0.224 | 0.356 | | | | 0.107 | 0.226 | 0.360 | | 0.118 | 2 |
| | Silane coupling | E2 | | | | | | | | | | | | | |
| | Oxazoline | E3 | | | | | | | | | | | | | |
| Elastomer | | F | | | | | | | | 1.1 | 1.1 | 1.2 | | | |
| Stabilizer | | G | 0.1 | 0.1 | 0.1 | 0.1 | 0.1 | 0.1 | 0.1 | 0.1 | 0.1 | 0.1 | 0.1 | 0.1 | 0.1 |
| E/B ratio | | | - | 0.02 | 0.02 | 0.02 | - | - | - | 0.02 | 0.02 | 0.02 | - | 0.02 | 0.02 |
| Notched Charpy impact strength (kJ/m²) | | 23°C | 65 | 53 | 25 | 17 | 15 | 9 | 11 | 57 | 31 | 16 | 25 | 49 | Extrusion not possible |
| | | -30°C | 15 | 19 | 12 | 14 | 12 | 7 | 8 | 28 | 20 | 17 | 12 | 4 | |
| Deflection temperature (1.80 MPa) | | °C | 126 | 126 | 126 | 126 | 133 | 133 | 134 | 125 | 125 | 125 | 126 | 90 | |
| UL 94 combustibility (1.5 mmt) | | | V-0 | V-0 | V-0 | V-0 | V-0 | V-0 | V-0 | V-0 | V-0 | V-0 | V-0 | V-0 | |
| Surface peeling of molded article | | No: O Yes: X | O | O | O | O | O | O | O | O | O | O | X | O | |
| Chemical resistance (23°C, 48 hrs) | | Strain % | | | | | | | | | | | | | |
| CHARMY GREEN | | 1% | X | O | O | O | O | O | O | O | O | O | O | O | |
| ARMOR ALL | | 1% | X | O | O | O | O | O | O | O | O | O | O | O | |
| BANANA BOAT | | 1% | X | X | X | O | X | X | O | X | X | O | X | X | |
| | | 0.4% | X | O | O | O | O | O | O | O | O | O | O | O | |

[Table 4]

| Component | | Simbol | Ex8 | Ex9 | Ex10 | Ex11 | Ex12 | Ex13 | Ex14 | Ex15 | Ex16 | Ex17 |
|---|---|---|---|---|---|---|---|---|---|---|---|---|
| PC resin (A) | | A | 100 | 100 | 100 | 100 | 100 | 100 | 100 | 100 | 100 | 100 |
| Liquid crystal polyester | | B | 5.3 | 5.3 | 5.3 | 5.3 | 11.2 | 11.2 | 11.2 | 11.2 | 5.3 | 5.3 |
| | | BX | | | | | | | | | | |
| Metal salt flame retardant (C) | | C | 0.08 | 0.08 | 0.08 | 0.08 | 0.09 | 0.09 | 0.09 | 0.09 | 0.08 | 0.08 |
| Phosphorus-containing flame retardant | | CX | | | | | | | | | | |
| Fluorinated resin (D) | | D | 0.3 | 0.3 | 0.3 | 0.3 | 0.3 | 0.3 | 0.3 | 0.3 | 0.3 | 0.3 |
| Reactive compatibilizer (E) | Carbodiimide | E1 | 0.015 | 0.030 | 2.5 | 3.0 | 0.030 | 0.067 | 5.0 | 6.0 | | |
| | Silane coupling agent | E2 | | | | | | | | | 0.106 | |
| | Oxazoline | E3 | | | | | | | | | | 0.106 |
| Elastomer | | F | | | | | | | | | | |
| Stabilizer | | G | 0.1 | 0.1 | 0.1 | 0.1 | 0.1 | 0.1 | 0.1 | 0.1 | 0.1 | 0.1 |
| E/B ratio | | | 0.003 | 0.006 | 0.47 | 0.57 | 0.003 | 0.006 | 0.45 | 0.54 | 0.02 | 0.02 |
| Notched Charpy impact strength (kJ/m$^2$) | | 23°C | 53 | 53 | 19 | 16 | 25 | 25 | 17 | 16 | 54 | 53 |
| | | -30°C | 19 | 19 | 13 | 12 | 12 | 12 | 9 | 9 | 19 | 19 |
| Deflection temperature (1.80 MPa) | | °C | 126 | 126 | 126 | 126 | 126 | 126 | 126 | 126 | 126 | 126 |
| UL 94 combustibility (1.5 mmt) | | | V-0 | V-0 | V-0 | V-0 | V-0 | V-0 | V-0 | V-0 | V-0 | V-0 |
| Surface peeling of molded article | | No: O Yes:X | X | O | O | O | X | O | O | O | O | O |
| Chemical resistance (23°C, 48 hrs) | | Strain% | | | | | | | | | | |
| CHARMY GREEN | | 1% | O | O | O | O | O | O | O | O | O | O |
| ARMOR ALL | | 1% | O | O | O | O | O | O | O | O | O | O |
| BANANA BOAT | | 1% | X | X | X | X | X | X | X | X | X | X |
| | | 0.4% | O | O | O | O | O | O | O | O | O | O |

[Industrial Applicability]

The polycarbonate resin composition of the present invention exhibits excellent chemical resistance, flame retardancy, impact resistance, heat resistance and moist heat resistance, and can therefore be advantageously used as materials for producing members in industrial fields such as housings for electrical and electronic equipment, motor vehicle components and residential materials.

## Claims

**1.** A polycarbonate resin composition comprising 1 to 60 parts by mass of a liquid crystal polyester (B) containing a

repeating unit represented by formulae (I) to (IV) below, 0.01 to 0.5 parts by mass of an organic metal salt flame retardant (C) and 0.05 to 1 parts by mass of a fluorinated resin (D) relative to 100 parts by mass of a polycarbonate resin (A), and having a notched Charpy impact strength of 15.5 kJ/$m^2$ or more, as measured at 23°C in accordance with ISO 179 by using an ISO dumbbell having a thickness of 3 mm:

[Compound 1]

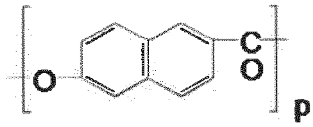

[I]

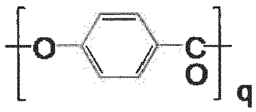

[II]

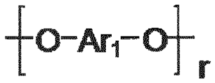

[III]

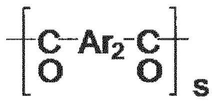

[IV]

in the formulae, $Ar_1$ is

[Compound 2]

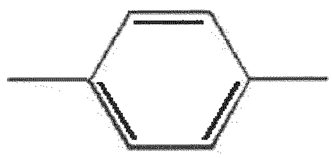

and/or

[Compound 3]

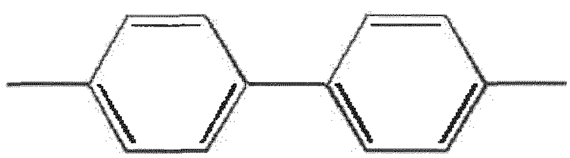

$Ar_2$ is

[Compound 4]

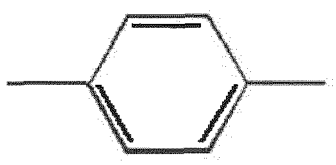

and/or

[Compound 5]

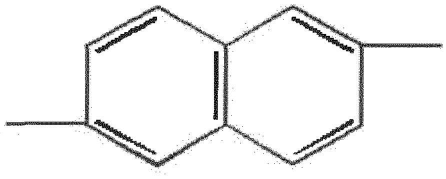

p, q, r and s are compositional proportions (mol%) of the repeating units in the liquid crystal polyester (B), and satisfy relationships below:

$$35 \leq p \leq 48,\ 35 \leq q \leq 48,\ 2 \leq r \leq 15,\ \text{and}\ 2 \leq s \leq 15.$$

2. The polycarbonate resin composition according to claim 1, further comprising 0.01 to 10 parts by mass of a reactive compatibilizer (E) relative to 100 parts by mass of the polycarbonate resin (A).

3. The polycarbonate resin composition according to claim 2, wherein the reactive compatibilizer (E) is at least one selected from among a silane coupling agent, a carbodiimide compound and an oxazoline compound.

4. The polycarbonate resin composition according to claim 3, wherein the reactive compatibilizer (E) is a carbodiimide compound.

5. The polycarbonate resin composition according to claim 1, wherein a melting point of the liquid crystal polyester (B) is 240°C or lower.

6. The polycarbonate resin composition according to claim 2, wherein a mass ratio (E)/(B) of the reactive compatibilizer (E) and the liquid crystal polyester (B) is 0.005 to 0.5.

7. A molded article comprising the polycarbonate resin composition according to any one of claims 1 to 6.

## Patentansprüche

1. Polycarbonatharzzusammensetzung, umfassend 1 bis 60 Massenanteile eines Flüssigkristall-Polyesters (B), der eine durch die nachstehenden Formeln (I) bis (IV) dargestellte Wiederholeinheit enthält, 0,01 bis 0,5 Massenanteile eines organischen Metallsalz-Flammschutzmittels (C) und 0,05 bis 1 Massenanteile eines fluorierten Harzes (D), bezogen auf 100 Massenanteile eines Polycarbonatharzes (A), und mit einer Kerbschlagzähigkeit nach Charpy von 15,5 $kJ/m^2$ oder mehr, gemessen bei 23°C in Übereinstimmung mit ISO 179 unter Verwendung einer ISO-Hantel mit einer Dicke von 3 mm:

[Verbindung 1]

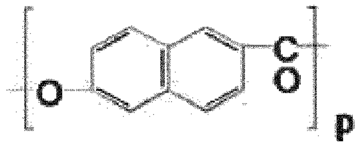

[I]

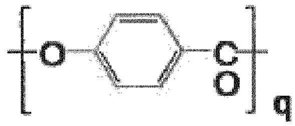

[II]

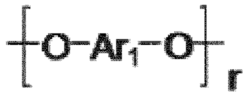

[III]

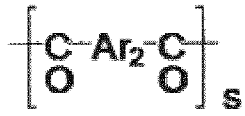

[IV]

,

in den Formeln ist $Ar_1$

[Verbindung 2]

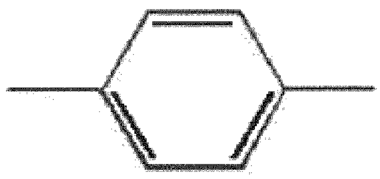

und/oder

[Verbindung 3]

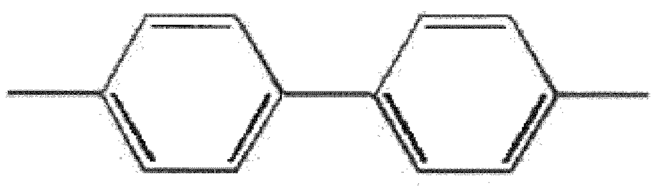

,

Ar2 ist

[Verbindung 4]

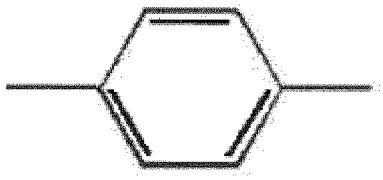

und/oder

[Verbindung 5]

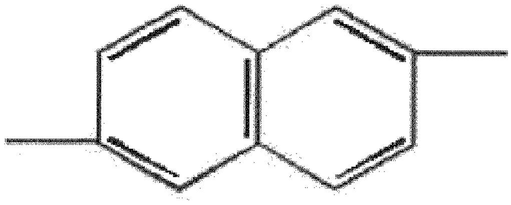

,

wobei p, q, r und s kompositorische Teile (mol%) der Wiederholeinheiten in dem Flüssigkristall-Polyester (B) sind und den nachstehenden Zusammenhänge genügen: $35 \leq p \leq 48$, $35 \leq q \leq 48$, $2 \leq r \leq 15$ und $2 \leq s \leq 15$.

2. Polycarbonatharzzusammensetzung nach Anspruch 1, weiter umfassend 0,01 bis 10 Massenanteile eines reaktiven Kompatibilitätsmittels (E), bezogen auf 100 Massenanteile des Polycarbonatharzes (A).

3. Polycarbonatharzzusammensetzung nach Anspruch 2, wobei das reaktive Kompatibilitätsmittel (E) mindestens eines, ausgewählt aus einem Silan-Haftvermittler, einer Carbodiimid-Verbindung und einer Oxazolin-Verbindung, ist.

4. Polycarbonatharzzusammensetzung nach Anspruch 3, wobei das reaktive Kompatibilitätsmittel (E) eine Carbodiimid-Verbindung ist.

5. Polycarbonatharzzusammensetzung nach Anspruch 1, wobei ein Schmelzpunkt des Flüssigkristall-Polyesters (B) 240°C oder weniger beträgt.

6. Polycarbonatharzzusammensetzung nach Anspruch 2, wobei ein Massenverhältnis (E)/(B) des reaktiven Kompatibilitätsmittels (E) und des Flüssigkristall-Polyesters (B) 0,005 bis 0,5 beträgt.

7. Formkörper, umfassend die Polycarbonatharzzusammensetzung nach einem der Ansprüche 1 bis 6.

**Revendications**

1. Composition de résine de polycarbonate comprenant 1 à 60 parties en masse d'un polyester à cristaux liquides (B) contenant une unité de répétition représentée par les formules (I) à (IV) ci-dessous, 0,01 à 0,5 partie en masse d'un ignifuge à sel métallique organique (C) et 0,05 à 1 partie en masse d'une résine fluorée (D) par rapport à 100 parties en masse d'une résine de polycarbonate (A), et ayant une résistance aux chocs Charpy sur barreau entaillé de 15,5 $kJ/m^2$ ou plus, telle que mesurée à 23 °C conformément à ISO 179 en utilisant un haltère ISO ayant une épaisseur de 3 mm :

[Composé 1]

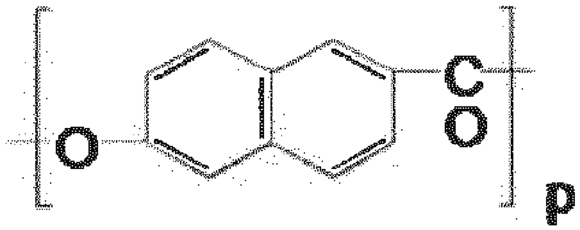

[I]

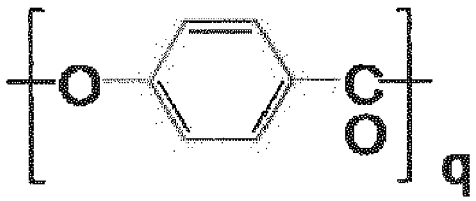

[II]

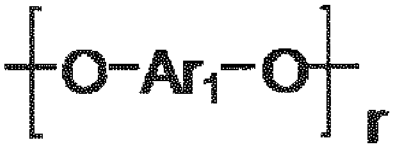

[III]

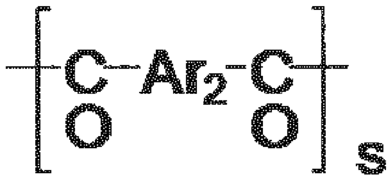

[IV]

dans les formules, $Ar_1$ est

[Composé 2]

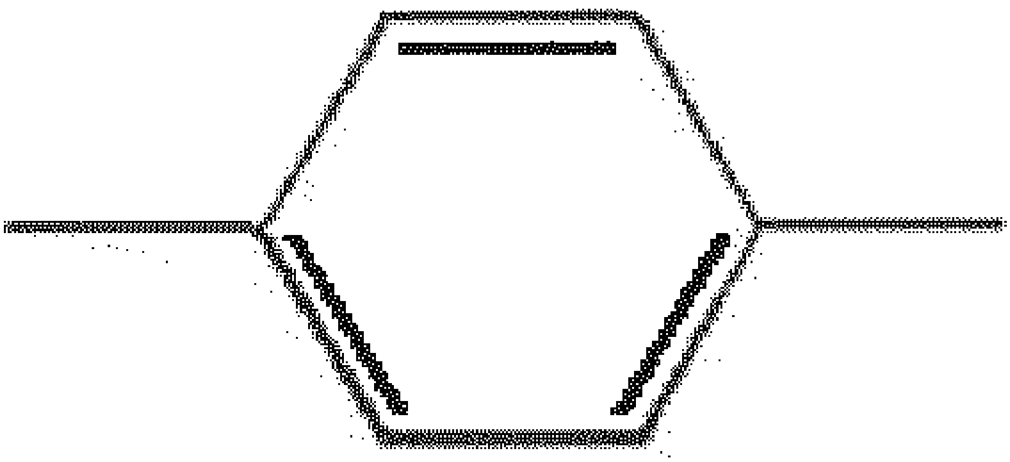

et/ou

[Composé 3]

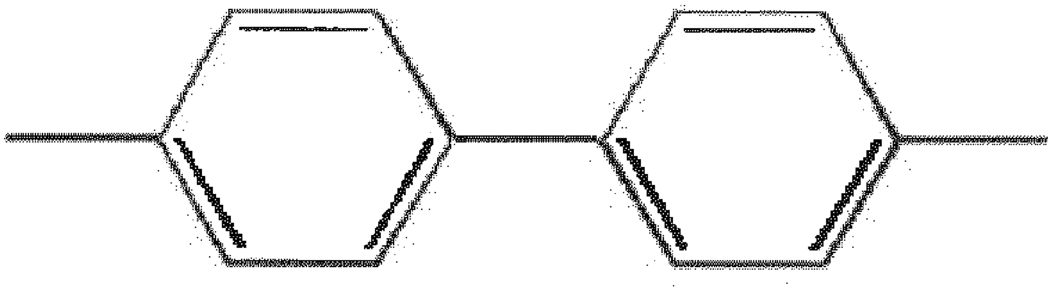

$Ar_2$ est

[Composé 4]

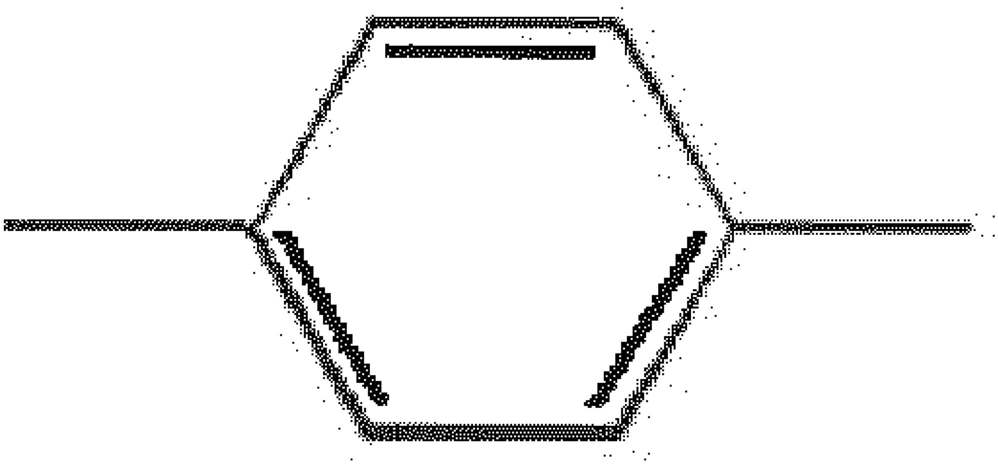

et/ou

[Composé 5]

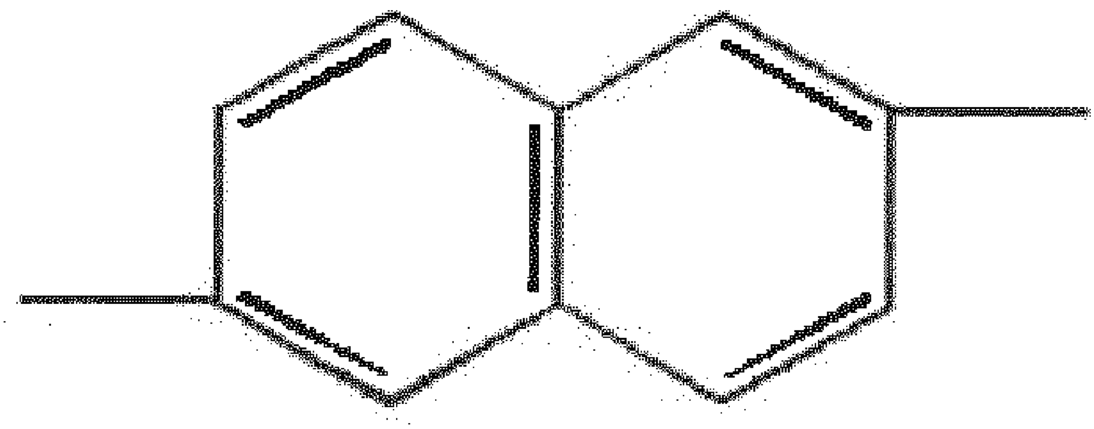

p, q, r et s sont des proportions compositionnelles (% en mole) des unités de répétition dans le polyester à cristaux

liquides (B), et satisfont les relations ci-dessous :

$$35 \leq p \leq 48,\ 35 \leq q \leq 48,\ 2 \leq r \leq 15,\ \text{et}\ 2 \leq s \leq 15.$$

**2.** Composition de résine de polycarbonate selon la revendication 1, comprenant en outre 0,01 à 10 parties en masse d'un agent compatibilisant réactif (E) par rapport à 100 parties en masse de la résine de polycarbonate (A).

**3.** Composition de résine de polycarbonate selon la revendication 2, dans laquelle l'agent compatibilisant réactif (E) est au moins un sélectionné parmi un agent adhésif au silane, un composé de carbodiimide et un composé d'oxazoline.

**4.** Composition de résine de polycarbonate selon la revendication 3, dans laquelle l'agent compatibilisant réactif (E) est un composé de carbodiimide.

**5.** Composition de résine de polycarbonate selon la revendication 1, dans laquelle un point de fusion du polyester à cristaux liquides (B) est de 240 °C ou inférieur.

**6.** Composition de résine de polycarbonate selon la revendication 2, dans laquelle un rapport massique (E)/(B) de l'agent compatibilisant réactif (E) et du polyester à cristaux liquides (B) est de 0,005 à 0,5.

**7.** Article moulé comprenant la composition de résine de polycarbonate selon l'une quelconque des revendications 1 à 6.

[Fig. 1]

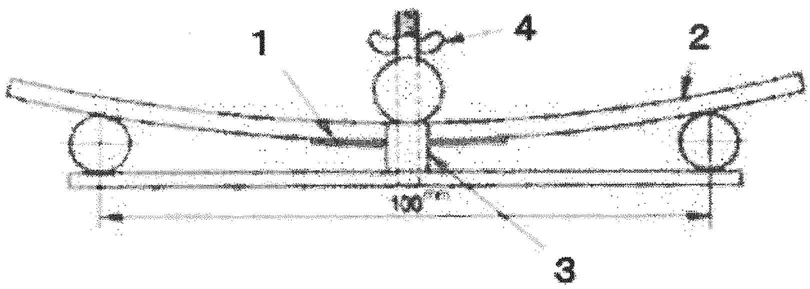

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5752990 B
- JP 2002294060 A